# EUROPEAN PATENT APPLICATION

(11) **EP 4 589 527 A2**
(43) Date of publication of application: **23.07.2025**
(21) Application number: 25152776.8
(22) Date of filing: 20.01.2025
(51) Int. Cl.: G06T 7/00, G01B 11/24

(54) **INSPECTION SYSTEM AND METHOD**

(30) Priority: 22.01.2024 GB 202400826
(71) Applicant: Inspecvision Limited, Mallusk County Antrim BT36 4TY (GB)
(72) Inventor: ANTONIS, Jan, Belfast, BT36 4TY (GB)
(74) Representative: FRKelly

(57) **Abstract**

A method of inspecting an object using a digital camera and a computing system involves comparing measured shape data obtained from a digital image of the object with digital reference data representing a nominal shape of the object, and generating an output indicating compliance or noncompliance of the measured shape of the object to the nominal shape of the object. The reference data is extracted from a CAD file by filtering CAD data based on characteristics of the entities that define the object in the CAD data. The filtering may involve extracting entity data based on the characteristics or excluding entity data from extraction based the characteristics.

## Description

### FIELD OF THE INVENTION

This invention relates to the inspection of manufactured objects.

### BACKGROUND TO THE INVENTION

There is a variety of applications that require inspection of objects to determine or verify their dimensions. For example, during or after the manufacture of an object it may be necessary to verify the object's dimensions for quality control purposes. Automatic inspection systems that employ digital cameras to inspect generally planar objects such as sheet metal or printed circuit boards are well known. Such systems suffer from a number of problems including extraction of data from computer-aid design (CAD) files, matching measured data with reference data, calibrating the position of the camera with respect to the measuring surface, and measuring objects that are larger than the measuring surface.

It would be desirable to mitigate one or more of the problems outlined above.

### SUMMARY OF THE INVENTION

From a first aspect the invention provides a method of inspecting an object using a digital camera and a computing system, the method comprising:
taking a digital image of the object using the camera, the image comprising digital image data; and
causing the computing system to
   derive digital measured data from the digital image data, the measured data representing a measured shape of the object;
   obtain digital reference data representing a nominal shape of the object;
   compare the measured data and the reference data; and
   generate, based on the comparison of the measured data and the reference data, an output indicating one or more instance of compliance or non-compliance of the measured shape of the object to the nominal shape of the object.

In preferred embodiments, obtaining digital reference data involves extracting the reference data from a computer file containing model data defining a model of the object, said computer file preferably being a computer-aided design (CAD) file, and wherein the method typically includes storing the extracted reference data in a reference data file.

Typically, the model data comprises data defining a plurality of entities that define the object, each entity being defined by respective entity data that is associated with at least one characteristic, and wherein extracting the data from the computer file involves filtering the model data based on one or more of said at least one characteristic, and wherein the filtering may involve extracting at least one instance of entity data based on one or more of said at least one characteristic, and/or excluding from extraction at least one instance of entity data based on one or more of said at least one characteristic, and/or excluding at least one instance of entity data that is determined to be not related to the nominal shape of the object. Typically, said at least one characteristic may comprise any one or more of: data type; entity type; line type; line thickness; colour and/or layer of the model data with which the entity or data is associated.

In preferred embodiments, the filtering involves extracting at least one instance of entity data that is determined to define at least part of the nominal shape of the object and/or a dimension of at least part of the nominal shape of the object and/or a tolerance of a dimension of at least part of the nominal shape, and/or wherein the filtering involves excluding from extraction at least one instance of entity data that is determined not to define at least part of the nominal shape of the object or a dimension of at least part of the nominal shape of the object or a tolerance of a dimension of at least part of the nominal shape.

The filtering may involves extracting at least one instance of entity data that is determined to define a line, or a curve or an arc or a circle or an ellipse.

Said one or more of said at least one characteristic may be selected in response to user input received via a user interface provided by the computing system. The method may include causing the computer system to display via a display device at least one image generated from said computer file, the image comprising at least one representation of the object, and to enable user interaction with the displayed at least one image via the user interface, said one or more of said at least one characteristic being selected in response to said user interaction. The user interaction may involve selection by the user of said one or more of said at least one characteristic.

Optionally, said user interaction involves selecting one or more part of the at least one representation of the object included in the at least one displayed image, and wherein the method may include causing the computing system to determine said one or more of said at least one characteristic depending on which characteristic(s) are associated with the selected one or more part of the at least one representation of the object included in the at least one displayed image.

Optionally, determining that at least one instance of entity data is not related to the nominal shape of the object comprises any one or more of: determining that said at least one instance of entity data is not connected to the nominal shape of the object; determining that said at least one instance of entity data does not define an enclosed perimeter; determining that said at least one instance of entity data forms an enclosed perimeter that is not located within an enclosed perimeter associated with the nominal shape of the object.

Typically, the model data comprises data defining a plurality of entities that define the object, and wherein the method further includes assigning each measurement contained in said measured data to an entity contained in said model data that defines at least part of the nominal shape of the object.

In preferred embodiments, assigning each measurement to an entity involves assigning the measurement to the entity that is determined to be closest to the respective measurement, and wherein, preferably, determining which entity is closest to the measurement involves calculating a distance between each measurement point each entity along a notional line from the measurement that is normal to a profile the entity.

The method may further include aligning the measured data assigned to a respective entity with the respective entity by rotating and/or translating the measured data to align with the data defining the respective entity, and/or minimizing the distance, or error, between the measured data and the entity data.

The method may further include fitting the measured data assigned to a respective entity with an entity type, preferably a shape entity type, associated with the respective entity, and wherein, preferably, comparing the measured data and the reference data involves comparing the fitted measured data of the respective entity with nominal shape data of the respective entity.

In typical embodiments, the model data comprises data defining at least one shape entity and data defining at least one dimension entity, and wherein each instance of shape entity data comprises a shape entity type, at least one shape entity reference point and optionally a shape entity size, and each instance of dimension entity data comprises a dimension type and at least one reference point, and wherein the method includes associating each instance of dimension entity data with one or more respective instance of shape entity data by comparing the respective dimension entity type with the respective shape entity type and determining that the respective dimension entity type matches the respective shape entity type, and/or by comparing the respective at least one shape entity reference point with the respective at least one dimension entity reference point and determining that the respective at least one shape entity reference point and the respective at least one dimension entity reference point are less than a threshold distance apart, and/or by comparing the respective shape entity size with a distance between at least two dimension entity reference points and determining that the respective shape entity size matches said distance.

The method may further include assigning each instance of dimension entity to a respective instance of shape entity if only one instance of shape entity is associated with the respective instance of dimension entity, and/or if there more than one instance of shape entity is associated with a respective instance of dimension entity, causing the computer system to display via a display device a list of said more than one instance of shape entity, and to enable user select one of the instances of shape entity on the displayed list via the user interface, and assigning the respective instance of dimension entity to the instance of shape entity selected by the user.

Advantageously, the method may include:
providing said object on a work surface in a field of view of the camera;
providing at least one mark on said work surface in the field of view of the camera, said at least one mark being shaped and dimensioned to be detectable in images taken by said camera;
taking a reference image with said camera and determining a reference location for said at least one mark from said reference image;
taking at least one subsequent image with said camera and determining a respective subsequent location for said at least one mark from each subsequent image;
comparing the respective subsequent location with the respective reference location; and adjusting the image data and/or the measured data depending on the difference between the respective subsequent location with the respective reference location, and/or generating an output indicating that the difference between the respective subsequent location and the respective reference location is excessive.

The method may include calculating from the respective subsequent location and the respective reference location, an amount by which the relative position of the work surface and the camera has changed, and adjusting the image data and/or the measured data depending on said amount to compensate for the change in the relative position of the work surface and the camera, preferably only if said amount is less than a threshold value.

The method may include calculating from the respective subsequent location and the respective reference location, an amount by which the relative position of the work surface and the camera has changed, and generating said output indicating that the difference between the respective subsequent location and the respective reference location is excessive if said amount exceeds a threshold value.

The method may include determining a value for at least one metric, for example translation, rotation and/or scale value(s), required to align, or substantially align, the respective subsequent location with the respective reference location, and using the value of said at least one metric to perform any one or more of the following tasks: adjust the image data and/or the measured data: determine an amount by which the relative position of the work surface and the camera has changed; and/or determine whether or not to generate said output indicating that the difference between the respective subsequent location and the respective reference location is excessive.

In some embodiments, the method includes:
providing at least two reference markers on the object;
locating the object in a first position on a work surface and taking a first image of a first section of said object, said image including said at least two markers;
moving the object to a second position on the work surface and taking a second image of a second section of said object, said image including said at least two markers;
determining from the image data of said first and second images a translation and/or a rotation of said at least two markers between said first and second positions, said translation and/or rotation preferably being determined with respect to a plane that is perpendicular to a line of sight of the camera; and
transforming the respective image data and/or measured data of at least one of said first and second images to a common co-ordinate system using the determined translation and/or rotation.

The method may include determining a respective 3-dimensional location of said at least two makers from each image, and determining said translation and/or rotation from the respective 3-dimensional locations.

The method may include projecting, preferably using 3D ray tracing, a respective reference point on said at least two markers to the work surface to determine a respective projected reference point on the work surface, and to determine the respective 3-dimensional location from the respective projected reference point, preferably by using one or more geometric method, for example using similar triangles, to calculate an offset between the respective 3-dimensional location and the respective projected reference point.

From another aspect the method provides a system for inspecting an object, the system comprising:
a digital camera for taking a digital images of the object, each image comprising digital image data; and
a computing system comprising:
   means for deriving digital measured data from the digital image data, the measured data representing a measured shape of the object;
   means for obtaining digital reference data representing a nominal shape of the object;
   means for comparing the measured data and the reference data; and
   means for generating, based on the comparison of the measured data and the reference data, an output indicating one or more instance of compliance or non-compliance of the measured shape of the object to the nominal shape of the object.

The system may include means for performing any one or more of the method features recited above or hereinafter.

Further advantageous aspects of the invention will be apparent to those ordinarily skilled in the art upon review of the following description of preferred embodiments and with reference to the accompanying drawings.

### BRIEF DESCRIPTION OF THE DRAWINGS

Embodiments of the invention are now described by way of example and with reference to the accompanying drawings in which:
Figure 1 is a schematic view of an inspection system embodying one aspect of the invention, the system being configured to perform an inspection method embodying another aspect of the invention;
Figure 2 is a plan view of a silhouette image of an object captured by a camera that is included in the inspection system of Figure 1;
Figure 3 is a nominal 2D reference representation of the object taken from a CAD file;
Figure 4 is an exemplary 2D CAD drawing including the 2D reference representation of Figure 3 together with extraneous information;
Figure 5 is a flow chart illustrating an exemplary method of filtering a CAD file;
Figure 6 is a flow chart illustrating a preferred method of assigning CAD data to measured data;
Figure 7 is an exemplary illustration of CAD entities with dimensions and tolerances from a CAD drawing;
Figure 8 is a flow chart illustrating a preferred method of extracting dimensions from a CAD file;
Figure 9 is a flow chart illustrating a first part of a preferred method of compensating for changes in the camera's position;
Figure 10 is a flow chart illustrating a second part of the preferred method of compensating for changes in the camera's position;
Figures 11A and 11B show respective views of the inspection system to illustrate a method of measuring objects that are larger than the measuring surface;
Figure 12 is a schematic side view of the inspection system illustrating a preferred method of 3D ray tracing 2D parts and markers; and
Figure 13 is a flow chart illustrating a preferred method of automatic 2D repositioning of a 2D object using 3D ray tracing.

### DETAILED DESCRIPTION OF THE DRAWINGS

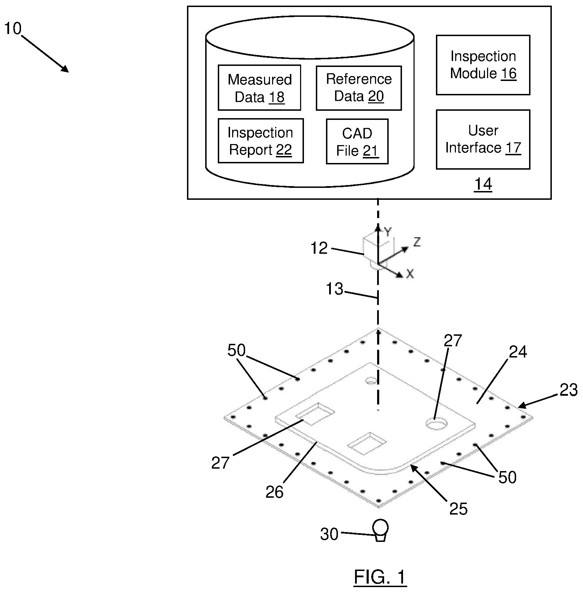

Referring now to Figure 1 of the drawings, there is shown, generally indicated as 10, an inspection system embodying the invention. The apparatus 10 comprises a digital camera 12 and a computing system 14. The computing system 14 may comprise one or more computer, microprocessor, CPU, microcontroller and/or other computing device and/or processing device (e.g. field programmable gate array (FPGA), application specific integrated circuits (ASIC), graphics processing units (GPU) and the like), including hardware and software for supporting the operation of the system 14 as described herein and as would be apparent to a skilled person. The computing system 14 may be provided locally to the camera 12 or remotely from the camera 12 and/or may comprise a distributed computing system as is convenient.

The digital camera 12 may be a conventional digital image camera or digital video camera and may include any conventional digital image sensor, preferably having a resolution of at least 6 Megapixels. It will be understood that, in practice, the level of resolution required depends on the required accuracy of the results and/or on the size of the area to be inspected. The digital camera 12 may be of any conventional type, e.g. a stills camera or a video camera (in which case each processed image may comprise a video frame), and/or having a telecentric or non-telecentric lens). The camera 12 is configured to capture, or detect, images as an array (typically a two dimensional array) of pixels. Typically, the image sensor comprises an array of optical detectors (e.g. comprising photodiode(s)), each optical detector corresponding to a respective pixel. As such, the camera 12 supports the capture of images defined by an array of camera pixels. Captured images may be sent directly from the camera 12 to the computing system 14, e.g. in real time or at any convenient time after capture, or indirectly, e.g. via a communications network (not shown) as is convenient. The camera 12 may therefore be connected directly to the computer system 14 or may communicate with the computer system 14 via a communications network, either of which may comprise wired and/or wireless communications link(s) as is convenient.

Typically, the computing system 14 is configured to run a data processing module 16, which may be referred to as an inspection module, conveniently in the form of one or more computer program. As is described in more detail below, the inspection module 16 is arranged to compare measured data 18 with reference data 20 and to generate a report 22 based on the comparison. The report 22, which may be referred to as an inspection report, may include one or more indication of compliance or non-compliance (e.g. pass or fail) of the measured data 18 with respect to the reference data 20. The measured data 18 comprises, or is derived from, digital image data captured by the camera 12 and communicated directly or indirectly to the computing system 14. In typical embodiments, the reference data 20 is derived from a computer-usable CAD file 21, which may take any conventional CAD file format. The measured data 18, reference data 20, CAD file 21 and inspection report 22 may be stored using any conventional memory or data storage means as is convenient. In typical embodiments, the inspection module 16 may include or be co-operable with CAD software that allows CAD files to be used in conventional manner.

The computing system 14 typically includes at least one user interface 17 for enabling a user (not shown) to interact with the computing system 14, in particular the inspection module 16. The user interface 17 preferably comprises a visual display device (e.g. a monitor or screen (not shown)) and at least one user input device (e.g. a touchscreen, a keyboard and/or a mouse (not shown)).

The system 10 includes a workstation 23 having a work surface 24, or measuring surface, for receiving an object 25 to be inspected. The work surface 24 is typically flat. In preferred embodiments, the work surface 24 is illuminated from below a light source 30. The workstation 23, at least in the area of the work surface 24, is therefore transparent or translucent, optionally being formed from a material that diffuses light so that a substantially uniform illumination of the work surface 24 from below is achieved. By way of example, the workstation 23, or at least the part that provides the work surface 24, may formed from diffuse frosted glass, or the like. The light source 30 may be telecentric or diffuse. The preferred arrangement is such that, in use, the object 25 is illuminated from below with a light source that appears uniform or even to the camera 12, which may be achieved using a diffuse light source or a telecentric light source.

Typically, the object 25 is a flat or planar object, or at least is substantially or generally flat or planar. As such the shape, contour(s) and or dimension(s) of the object 25 that it is desired to inspect are defined in two dimensions (corresponding to the X-Z plane as shown in Figure 1). The object 25 typically has a uniform, or substantially uniform, thickness, thickness being the dimension in the Y axis as shown in Figure 1 and, in the preferred embodiment, in a direction substantially parallel with the normal line of sight of the camera 12. The shape of the object 25 may be defined by its outer perimeter 26 and/or by any aperture(s) 27 that may be formed in the object 25. The object 25 is typically formed from an opaque material such as metal, plastics, wood, cardboard or paper, but may alternatively be formed from translucent (but not fully transparent) material. In typical embodiments, the object 25 is a machined part. It will be understood that the specific size and shape of the illustrated object 25, and the number, size, shape and arrangement of apertures 27, is by way of example only.

In use, the object 25 is located on the work surface 24. The camera 12 is located over the work surface 24 such that the object 25 is within its field of vision. The camera 12 has a focal point (not shown) and a normal line of sight 13 (or optical axis), the normal line of sight being the line of sight from the focal point which is perpendicular to the camera's image plane. Preferably, the camera 12 is arranged with respect to the work surface 24 so that the normal line of sight 13 of the camera 12 is perpendicular or substantially perpendicular to the work surface 24. While an image is being taken, the camera 12 is fixed with respect to the work surface 24 and may be held in a suitable fixed position by any suitable means, for example a gantry or other support structure (not shown). Moreover, while an image is being taken, the object 25 is fixed with respect to the work surface 24 and therefore with respect to the camera 12.

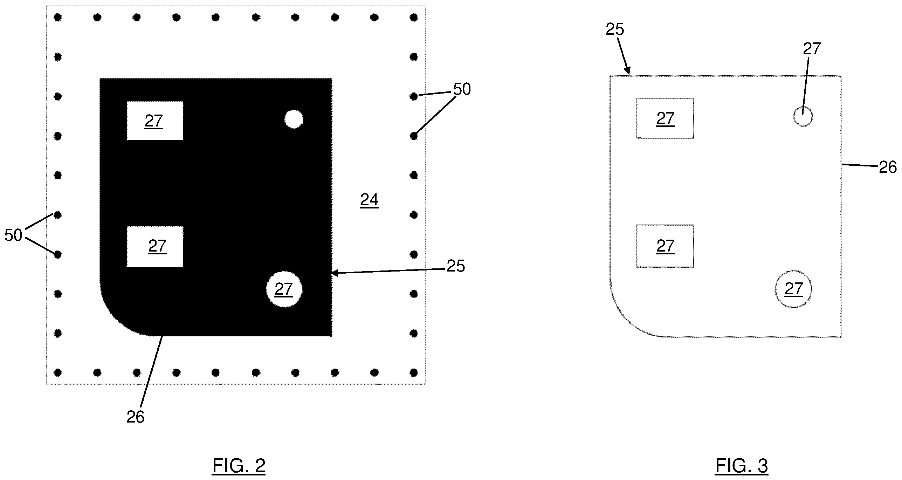

The illuminated, or backlit, work surface 24 causes a silhouette, or occluding contour, of the object 25 to be presented to the camera 12 and so facilitates detection of the object's shape, in particular its perimeter(s), in the X-Z plane. It is not essential to illuminate the work surface 24. For example, providing the work surface 24 and the object 25 in respective contrasting colours or shades enables the camera 12 to detect the outline of the object 25 using conventional colour separation techniques. The contrasted outline of the object 25 against the work surface 24, whether by silhouette or colour contrast, may be referred to as an occluding contour. By way of example, the occluding contour of the object 25 is shown in Figure 2 (together with the work surface 24).

In preferred embodiments, the system 10 is essentially a 2D measurement system which uses the camera 12 to extract the 2D contour of the object 25, preferably using a backlight to create a silhouette of the object. During use, the camera 12 captures an image of the object 25 producing corresponding image data normally comprising a plurality of pixels. The image data is preferably of a lossless format, e.g. comprising a bitmap, but may alternatively be of a lossy format, e.g. JPEG. The image data provides the measured data 18. The captured image data comprises 2D data representing the shape, or occluding contour, of the object 25 in the X-Z plane. The position in the X-Z plane with which a pixel of the image data corresponds can be determined. As can be seen from Figure 1, it is conveniently assumed that the work surface 24 lies substantially in the X-Z plane and the camera's normal line of sight 13 lies in a Y plane (on or parallel with the Y axis). It is noted that in this description a conventional XYZ reference co-ordinate system is adopted, where the X, Y and Z axes are mutually orthogonal.

The system 10 is calibrated such that the position and orientation of the camera 12 and the orientation of the object 25 in a common co-ordinate system (XYZ system) are known by the system 10, typically at least by the inspection module 16, as is the position and orientation of the work surface 24 (or object plane). For example, the position of the camera's focal point in the XYZ co-ordinate system is known by the module 16. In the preferred embodiment, the inspection module 16 is programmed to assume that the work surface 24 is perpendicularly disposed with respect to the camera's normal line of sight 13 (lying in the X-Z plane) and is at a known, fixed distance from the camera 12 (e.g. from the camera's focal point) along the normal line of sight 13 (known Y-axis co-ordinate, e.g. Y=0). In preferred embodiments, the object 25, or at least its in use upper surface, is perpendicularly or substantially perpendicularly disposed with respect to the camera's optical axis 13. It is also preferred that the inspection module 16 is programmed to assume that the camera's optical axis 13 passes near the object 25 (i.e. that the object 25 is in the camera's field of view) and is positioned generally over the object 25 rather than significantly to the side of the object 25). The camera's optical axis 13 may intersect with the object 25 (i.e. the camera 12 is positioned over the object 25 rather than to the side of the object 25). In the preferred embodiment, the inspection system 10 is arranged so that these assumptions are correct. It is preferred, but not essential, that the inspection apparatus 10, and in particular the inspection module 16, is configured for use with objects that are substantially planar and which, during use, lie substantially in an X-Z plane.

The reference data 20 comprises data indicating the nominal shape, and typically also dimensions, of the object 25. In preferred embodiments, the reference data 20 indicates the nominal shape and dimensions of the object 25 in two-dimensions (2D), in particular the dimensions corresponding to the X-Z plane. The reference data 20 typically comprises data indicating the nominal shape and dimensions of the outer perimeter 26 of the object and/or the perimeter of any aperture(s) 27 formed in the object 25. Corresponding data is obtained from the image captured by the camera 12 to provide the measured data 18 for comparison against the reference data 20. The measured data 18 may be obtained from the image data in any convenient known manner. Typically, the image data is processed to detect the perimeter(s) of the outer contour of the object 25 and of any internal contour(s), e.g. apertures. Such perimeters may comprise a sequence of pixel or sub-pixel x-z locations in the image, wherein there is typically one sequence for each perimeter. The detected perimeter(s) may be projected onto the work surface 24 by ray tracing, and using the calibrated or defined position and orientation of the camera 12 with respect to the work surface 24, and internal camera calibration parameters such as focal length and lens distortion, a respective sequence of real world measurement points on the work surface 24 may be determined for each perimeter. The known thickness of the object 25 may be used to compensate the measurement points for the thickness of the object 25. By way of example, European patent EP1467176 discloses a method of obtaining measured data from image data. By way of example, the nominal 2D shape of the object 25 as defined by the reference data 20 is shown in Figure 3.

Typically, objects, such as object 25, that are intended to be machined or otherwise manufactured are defined by a CAD model contained in a digital CAD file. By way of example the CAD model may define the object as a wireframe, mesh, solid 3D, 2D and/or other representation(s), usually with measurements that indicate tolerances (e.g. corresponding to known machining limits). CAD files may include other information such as manufacturing data, material properties, product manufacturing information, additional geometric information, revision numbers, customer and part identifiers, and so on. Typically, a CAD model comprises a plurality of entities (also known as objects) arranged in a plurality of CAD layers. A CAD layer is a component of a CAD file and CAD models can be organised by assigning entities to layers according to logical categories. Each layer may be assigned one or more properties (e.g. colour, line type, line weight, layer, and/or transparency) that are applied to all entities assigned to that layer.

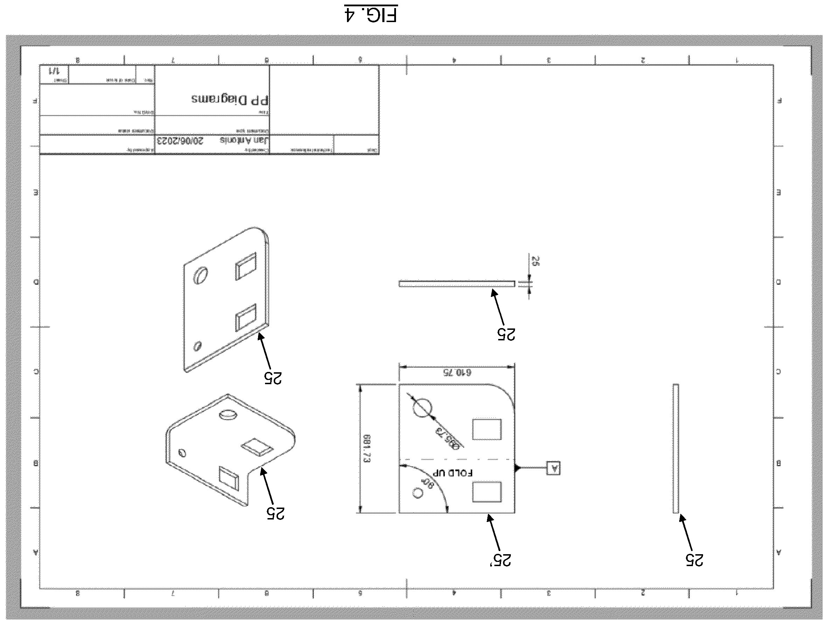

Data defining the nominal shape and dimensions of the object 25 is included in the CAD file 21, typically as part of the CAD model that defines the object 25. To inspect the 2D shape of the object 25, the measured 2D shape (as shown in Figure 2 and as derived from the captured image data) is compared to the nominal 2D shape of the object 25 (as shown in Figure 3). However, the CAD file 21 typically also contains extraneous information other than the shape of the object 25, e.g. product manufacturing information, additional geometry, revision numbers, customer and part identifiers, and so on. By way of example, Figure 4 shows a 2D CAD drawing that includes, in addition to a plan view 25' of the nominal 2D shape of the object 25, other views of the object 25 (two isometric views and two side views in this example), annotations (such as arrows, lines and text), a border or frame, and data fields. The CAD file 21, which in typical embodiments may be referred to as a 2D CAD file, contains not only data defining the nominal 2D shape of the object 25 but also data defining the relevant extraneous information. In such cases, in order to inspect the object 25, it is necessary to isolate and extract the CAD data which describes the profile of the object's occluding contour in order to provide the reference data 20 against which the measured data 18 is compared.

Within a well-structured CAD file it is common for data types or entity types to be differentiated from each other in some way, e.g. by association with a layer, colour, line type, line thickness, and/or other characteristic(s) or attribute(s), which is unique to that data or entity type. However many CAD files are not well structured, making automatic extraction of an object's shape from the CAD file difficult or even impossible.

To facilitate the ability of the system 10 to extract or otherwise determine the nominal shape of the object 25, in particular the nominal 2D shape of the object 25, from the CAD file 21, one or more characteristic may be selected, defined or otherwise determined that differentiates the nominal shape data from other data contained in the CAD file 21. The system 10, conveniently the inspection module 16, may be configured to use the, or each, differentiating characteristic to filter the data in the CAD file 21 to extract the data of interest, i.e. the nominal 2D shape data in this instance. The characteristic(s) typically comprise any one or more of: data type, entity type, line type, line thickness, colour and/or layer, and may be indicated in the CAD file 21 in conventional manner.

In some cases, one or more suitable differentiating characteristic is known and can therefore be used to filter the data without requiring any user input. For example, the nominal shape data contained in the CAD file 21 may be assigned a particular data type or entity type (e.g. data type = 2D contour, or data type = 2D shape, or entity type = line), and that data type or entity type may be used as a filter to extract the nominal shape data from the CAD file 21.

However, it is common for suitable differentiating characteristics to vary from case to case, and to only be discernible by inspection of the CAD file 21. For example, upon opening the CAD file 21 the user may discern that the nominal shape data is provided in a particular layer, and/or associated with a particular colour, line type and/or line thickness, or any combination of such characteristics. In some case it may take some manual experimentation by the user to determine which characteristic(s), if any, can be used as a filter to extract the nominal shape data from the other data in the CAD file 21. For example, the layer which contains the 2D contour of the object 25 may have an unexpected name.

Another way to determine suitable characteristic(s) for filtering the CAD file data is for the user, via the user interface 17, to manually select a sample of legitimate input data, i.e. one or more part of the nominal shape data, the system, conveniently the inspection module 16, being configured to determine one or more suitable filtering characteristic(s) from the selected sample data. Hence, the selected sample data may be used to train the system 10 to extract the nominal shape data. The system 10 may be configured to determine suitable differentiating characteristic(s) from the sample data and to create a filter based on the differentiating characteristic(s).

It is also common for CAD files to contain malformed geometry data. For example duplicate features such as two lines of the same size and position, or entities which are not connected to other entities. Additional data filters can be created to detect, remove and/or fix malformed geometry data.

Additionally, it may be desirable to obtain dimensions and/or tolerances relating to the nominal shape data from the CAD file 21. Dimension data and/or tolerance data may be extracted from the CAD file data using one or more filter in a manner the same or similar to that described above in relation to the nominal shape data. In particular, one or more characteristic may be selected, defined or otherwise determined that differentiates the dimension and/or tolerance data from other data contained in the CAD file 21. The, or each, differentiating characteristic may be determined in any suitable manner, for example comprising any one or more of a data type (e.g. data type = dimension, or data type = tolerance), a user-selected characteristic discerned from inspection of the CAD file, a characteristic determined by the system 10 based on a user-selected sample of the data of interest (e.g. dimension data and/or tolerance data). The system 10, conveniently the inspection module 16, may be configured to use the, or each, differentiating characteristic to filter the data in the CAD file 21 to extract the data of interest, i.e. the dimension data and/or tolerance data in this instance.

The extracted data can be used when creating the inspection report 22, as is described in more detail hereinafter.

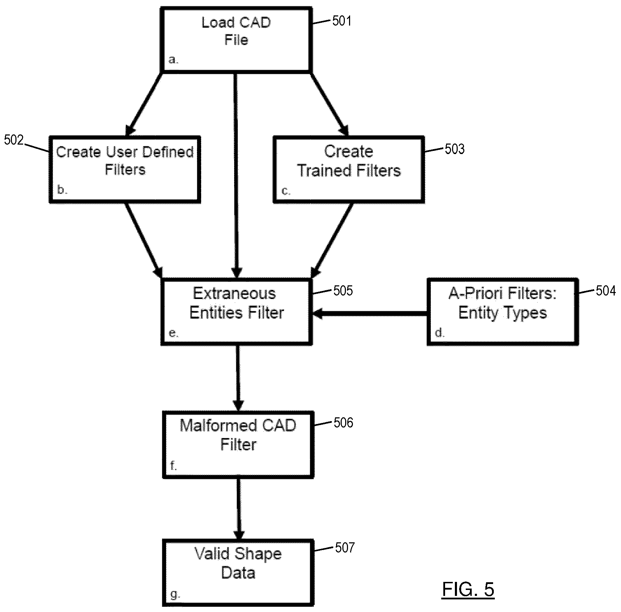

Figure 5 is a flow chart illustrating an exemplary method of filtering the CAD file 21 to extract the data of interest, which may comprise any one or more of the nominal shape data, dimension data and tolerance data.

At block 501 the system 10, typically the inspection module 16, loads the relevant CAD file 21. The CAD file 21 is therefore provided as an input to the system 10. Loading the CAD file 21 may involve opening or otherwise accessing the CAD file 21 and typically displaying the CAD drawing of the object 25 via the user interface 17. For example, the CAD drawing shown in Figure 4 may be displayed.

At block 502, the user creates one or more filter, each filter identifying one or more characteristic that is suitable for use in extracting the relevant data of interest from the CAD file 21. To this end, the user may interact with the displayed CAD drawing via the user interface 17 in order to determine which characteristic(s) are to be included in the filter. This may involve the user selecting on the displayed drawing one or more entity that is part of the nominal shape of the object 25 and determining which characteristic(s) are associated with the selected entity and which may be used to differentiate the nominal shape from the other data in the CAD file 21.

For example, the user may determine that the nominal shape (advantageously only the nominal shape) is contained in one or more layer of the CAD drawing, in which case the, or each, relevant layer is added to the filter for extracting the nominal shape. Another way for the user to determine which layer(s) contain the nominal shape is to turn layers on and off in the displayed drawing and to note which layer(s) are on when the nominal shape is displayed.

By way of example, the CAD file 21 may contain layers with the names "0", "Frame", "Contour", "Tolerances", "Dimensions", "10" and "30". By selecting one or more entity that makes up the nominal shape of the object 25 and inspecting the associated layer name(s), the user may determine that the layer "Contour" contains some or all of the nominal shape of the object 25. By turning each layer on/off the user may also determine that the layer "30" contains the circle entities which describe part of the nominal shape. It is therefore determined that the layers "30" and "Contour" contain the nominal shape of the part and, as such, these layers are included in the filter for extracting the nominal shape.

In the same or similar manner the user may identify one or more other characteristic, such as line type, line thickness, line colour, and so on, that is associated with the nominal shape and which may be used to differentiate the nominal shape from the other data in the CAD file 21, and such characteristic(s) may be used to define the filter (instead of or as well as layer(s), as applicable).

In the same or similar manner the user may identify one or more characteristic that is suitable for use in extracting other data of interest from the CAD file 21, e.g. dimension data and/or tolerance data. Conveniently, dimension data and tolerance data may be contained in respective layers (e.g. the "Tolerances" and "Dimensions" layers respectively) in which case the respective data can be extracted using the respective layer in the filtering process. However, in some cases the relevant data may be contained in more than one layer in which case it may be necessary to identify one or more other suitable characteristic, e.g. line type, line thickness, line colour, and so on, as well as or instead of layers. A separate filter may be created for each type of data of interest (e.g. a respective filter for each of shape, dimensions and tolerances), or the relevant characteristic(s) for extracting more than one type of data or interest may be included in the same filter (e.g. the characteristics for shape, dimensions and tolerance are all included in the same filter. Having separate filters for each type of data of interest can be advantageous in that it allows the respective data to be extracted and used separately from the other type(s) of data.

At block 503, one or more filter is created by the system 10, typically by the inspection module 16, in response to user input received via the user interface 17. As before, each filter identifies one or more characteristic that is suitable for use in extracting the relevant data of interest from the CAD file 21. In this case, the system 10 is trained or guided by the user input to enable it to determine which characteristic(s) are suitable for use in extracting the data of interest. The user may interact with the displayed CAD drawing via the user interface 17 by selecting on the displayed drawing one or more entity that is part of the nominal shape of the object 25. The or each selected entity serves as user input that enables the system 10 to determine which characteristic(s) are associated with the selected entity and which may be used to differentiate the nominal shape from the other data in the CAD file 21. For example, the system 10 may be configured to determine in which layer(s) of the CAD drawing the or each selected entity resides and use this information to create a filter that extracts other entities (in particular entities of the same type) from the, or each, identified layer in order to extract the nominal shape data from the other data in the CAD file. For example the user may select a line forming the outside contour of the object 25. The system 10 may determine that the selected line is in a particular layer (e.g. the "Contour" layer in the above example) and so create a filter that extracts all entities, or all lines, from that layer. Alternatively or in addition, the system 10 may determine that the selected line (or other entity) is associated with one or more other characteristics such as line type, line thickness, line colour, and so on, and may create the filter such that all entities, or all lines, having the relevant characteristic(s) are extracted from CAD file 21.

In the same or similar manner the system 10 may be configured to, based on the user input, identify one or more characteristic that is suitable for use in extracting other data of interest from the CAD file 21, e.g. dimension data and/or tolerance data. Conveniently, dimension data and tolerance data may be contained in respective layers (e.g. the "Tolerances" and "Dimensions" layers respectively) in which case the respective data can be extracted using the respective layer in the filtering process. However, in some cases the relevant data may be contained in more than one layer in which case it may be necessary to identify one or more other suitable characteristic, e.g. line type, line thickness, line colour, and so on, as well as or instead of layers. A separate filter may be created for each type of data of interest (e.g. a respective filter for each of shape, dimensions and tolerances), or the relevant characteristic(s) for extracting more than one type of data or interest may be included in the same filter (e.g. the characteristics for shape, dimensions and tolerance are all included in the same filter. Having separate filters for each type of data of interest can be advantageous in that it allows the respective data to be extracted and used separately from the other type(s) of data.

Optionally, the system 10 may be configured to scan through the other entities (i.e. other than the user-selected entity or entities) in the CAD file 21 and identify any entities that have matching end points to the end points of the selected line(s) or arc(s), i.e. indicating that they are connected to the selected line(s) or arc(s). This process may be repeated for each detected line or arc until the entire outer perimeter, or other perimeter, of the object 25 is detected, and may therefore be automatically extracted. The characteristic(s) of the set of entities that form the detected perimeter may be used to create the filter.

By way of example, assume that the entities selected to train or guide the system 10 only reside in layers "30" and "Contour" and contain only contain solid black lines of thickness 2. With reference to Figure 4, the dashed fold line within the plan view 25' of the nominal shape of the object 25 has the same line colour and layer as the nominal shape of the object. However its line thickness is 1 and its line type is dashed. The fold line would therefore not pass through the trained filter.

Block 504 illustrates that one or more filters may be provided to extract data from the CAD file 21 that are associated with one or more required characteristic that the data of interest is required to have. For example, the nominal shape data can typically only be provided by one or more entity types, e.g. any one or more of lines, arcs, circles, ellipses or curves. A filter may therefore be provided that causes or allows only entities of the required type(s) to be extracted. Other characteristics that may be included in such a filter include characteristics identifying relevant entity or data type(s) such as dimensions and/or dimension tolerances. Such filters may be created prior to use of the system 10 based on known required characteristics of the data of interest and may therefore be referred to as *a priori* filters. In preferred embodiments, the *a priori* filter(s) may be used to exclude any entities contained in the CAD file 21 that do not have the required characteristic(s) from being extracted for the reference data 20.

By way of example, with reference to Figure 4, it is assumed that the text "FOLD UP" is on layer "30" and has the same colour, line thickness and line type as the nominal data. However the entities are of type "text", so they would not pass through the *a priori* filter. Additionally the fold line has a line type "dashed" and non-solid lines may be excluded by the *a priori* filter.

At block 505, the or each filter that has been created or provided at blocks 502, 503 and 504, as applicable, are applied to the CAD file 21 by the system 10, typically by the inspection module 16, in order to extract the data of interest from the CAD file 21. The filter(s) may be applied individually or collectively (e.g. as a single combined extraneous entities filter) as desired.

It is possible for unwanted additional data to pass through the filter(s) since it is not uncommon for unwanted additional data to be associated with the same characteristics, e.g. entity types, layers, line types, thickness, and so on, as the nominal data. For example the CAD file 21 may be poorly constructed and all the entities may be on the same layer, or have the same colour, line type and/or line thickness. For example, the frame shown in the CAD drawing of Figure 4 contains line entities corresponding to the line entities used to describe the nominal shape of the object 25.

Referring to block 506, if unwanted additional data passes through the filter(s) applied at block 505, it is not uncommon for the unwanted data to be disconnected from the entities describing the nominal shape of the object 25. It can be assumed that the nominal shape of the object 25 is defined by closed perimeters, for example the closed outer perimeter 26 and the perimeters of apertures 27 of the object 25 shown in Figures 1 to 3. One or more filter may therefore be created to remove data representing entities that not form a closed perimeter from the filtered data. By way of example, with reference to Figure 4, the small lines around the outside frame of the CAD drawing which denote scale are also on layer "30", and are of line thickness 2, are black and are solid. As such data representing these lines may pass through the filter(s) applied at block 505. However, these small lines are disconnected entities which do not form an enclosed perimeter and can therefore be removed from the filtered data.

Furthermore, it can be assumed that the nominal shape describes only a single object. If data or entities representing multiple enclosed perimeters passes through the filter(s) applied at block 505, the largest enclosed perimeter can be assumed to be the nominal shape of the object 25, and entities which describe smaller enclosed perimeters which are not contained within the largest enclosed perimeter can be removed from the filtered data. By way of example, in Figure 4 the enclosed rectangles which form the side views of the object 25 are also on layer "30" and are of the same line thickness, line type and line colour as the plan view 25' of the nominal shape of the object 25. However, the enclosed area of these rectangles is smaller than the area of the plan view 25' of the object 25 and so they can be removed from the filtered data. Conversely, the nominal shape includes contains a plurality of relatively small enclosed perimeters corresponding to the apertures 27 that are contained within the largest enclosed perimeter 26 of the nominal shape and so data representing these apertures is assumed to be part of the nominal shape of the object 25. In this example it is assumed that the frame around the drawings of the object 25 is provided in a different layer, and/or has a different line thickness, than the drawings of the object 25 and so is not determined to by the nominal shape of the object by means of one or more other filter.

After the filters have been applied (505) and the malformed CAD entities have been removed, disregarded or otherwise filtered, the remaining entities only define the nominal shape of the object 25 (block 507). The data corresponding to these entities and extracted from the CAD file 21 serves as the reference data 20 against which the measured data 18 is compared. More particularly, in preferred embodiments the reference data 20 is compared with the measured data 18 after the measured data 18 has been assigned to a respective CAD entity and a corresponding fitted measured entity is created for comparison with the respective nominal CAD entity, as is described in more detail hereinafter.

It will be understood that while in some embodiments the filtering described with reference to all of blocks 502, 503, 504 and 506 is performed, in other embodiments only some of the filtering may be performed as suits the application. For example, the filtering described in relation to only one or other of blocks 502 and 503 may be performed, or the filtering of both blocks 502, 503 may be performed. Alternatively, the filtering of both blocks 502, 503 may be omitted. Furthermore the filtering of either one or both of blocks 504 and 506 may be omitted.

To facilitate comparison of the measured data 18 and the reference data 20, the measurement data 18 is assigned to the entities of the CAD drawing that define the nominal shape of the object 25.

In preferred embodiments, the system 10, typically the inspection module 16, is configured to assign the measured data 18 to corresponding parts of the reference data 20, in particular to assign the measured data 18 to one or more respective entity of the nominal shape of the object 25 that is represented in the reference data 20.

Typically, the measurements of the object 25 on the work surface 24 are not perfectly aligned to the nominal shape of the object 25 extracted from the CAD file 21. To ensure that the appropriate measurement data is assigned to the corresponding entity of the nominal shape contained in the reference data 20 obtained from the CAD file 21, the measurement data is aligned to the nominal shape. The measurement data 18 typically comprises a plurality of measurement points. For example, as described above the measurement data 18 may comprise a respective sequence, or plurality, of measurement points for each perimeter of the object 25 detected in the image data. To align the measurement data 18 to the nominal shape, each measurement point contained in the measurement data 18 is assigned to the respective nearest entity contained in the reference data 20. This may be achieved by calculating the distance, preferably the shortest distance, between each measurement point and each CAD entity. Each measurement point is assigned to the CAD entity that is determined to be closest to it, i.e. closest in the geometric distance sense. Preferably, the distance between each measurement point and each CAD entity is calculated along a notional line from the measurement point that is normal to the profile or perimeter of the CAD entity. Calculating the distance between each measurement point and each CAD entity may be performed using any suitable conventional mathematical method.

Preferably, the total distance from all the measurement points to their assigned entities is minimized by adjusting the rotation and/or translation of the measurement data 18 to determine an optimal alignment of the measurement data 18 with the reference data 20, e.g. using a standard error minimization technique, for example the Levenberg-Marquardt technique.

Preferably, after the alignment is complete the measured version of each entity can be determined by fitting the same entity type, in particular the same shape type, to the measurement data assigned to that entity, for example by using a least squares fitting technique or any other convenient data fitting technique.

The measured entity, preferably the fitted measured entity, and the corresponding nominal entity may then be compared to determine the status of that entity, e.g. a match or non-match (i.e. compliance or non-compliance). The dimensions of the measured entity are obtained from the measured data 18 and the dimensions of the corresponding entity are obtained from the reference data 20. Determining whether there is a match or non-match preferably takes into account the respective tolerance specified in the reference data 20.

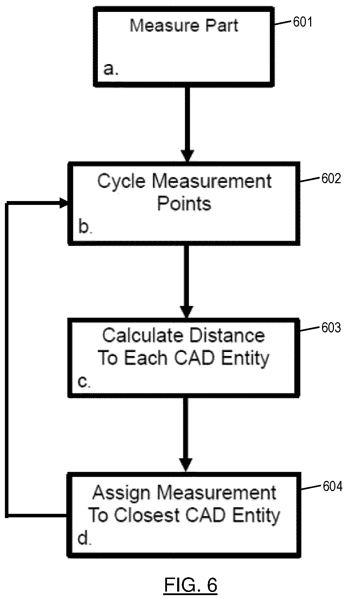

Figure 6 is a flow chart illustrating a preferred method of assigning the nominal reference data obtained from the CAD file to the measured data 18.

At block 601 the camera 12 takes an image of the object 25 from which measurement data 18 of its occluding contour can be obtained.

At blocks 602 to 604, for each measurement, or measurement point (602), the distance of each measurement point to each CAD entity is calculated (603), and the measurement is assigned to the entity associated with the shortest calculated distance (preferably measured along an axis which is perpendicular the entity's profile) (604).

In preferred embodiments, the system 10 is configured to create a 2D Inspection Report from ambiguous 2D Dimensions.

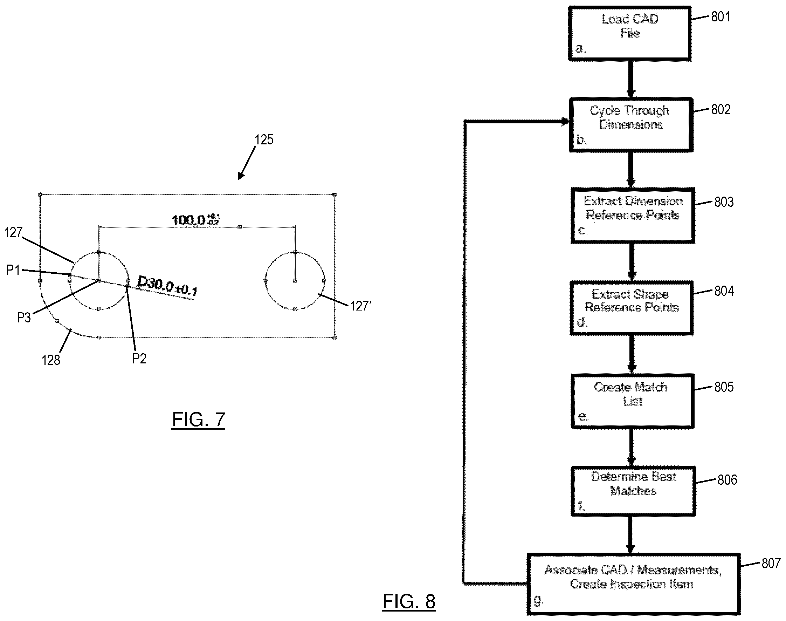

Planar objects, which may be referred to as 2D objects or 2D parts, are usually defined in a 2D CAD file. 2D CAD files typically contain 2D dimensions which often include dimension tolerances. It is desirable to automatically convert these dimensions into an inspection report to automate the setup of the inspection of the object. Entities defining the nominal shape of the object 25 are contained within the 2D CAD file. However, the 2D CAD file format does not normally provide any information to associate a given dimension with the entity or entities which it relates to. For each dimension entity, the only available data is normally the dimension value, the dimension type, its end point locations (reference points) and its tolerance information. For example, Figure 7 shows a CAD drawing of an exemplary 2D object 125 that includes two apertures 127, 127', each of which may be defined as a circle entity, and two dimension entities "100.0" and "D30.0" each being associated with respective tolerance limits. The dimension entity "D30.0" may be associated with the dimension type "arc/circle", the end points P1 and P2, and also the centre point P3. The dimension entity "D100.0" is associated with dimension type "horizontal distance" and the end points P3 and P4. However, the CAD file defining the object 125 does not explicitly assign the dimension entity "D100.0" to the distance between the apertures 127, 127', nor does it assign the dimension entity "D30.0" to the diameter of the aperture 127.

To determine which entity or entities each dimension entity references, the preferred system 10, typically the inspection module 16, is configured to use the respective dimension type to filter, or match, the dimension entity with one or more shape entity contained in the CAD file 21, or in the reference data 20. For each shape entity that has a type that matches or is otherwise associated with the respective dimension type, e.g. the dimension type "diameter" matches the entity types "arc" or "circle", one or more reference point for that shape entity, e.g. the center point P3 of the circle 127 may be compared to the reference point(s) of the respective dimension entity. If the distance between the respective reference point(s) of the shape entity and the dimension entity is determined to be below a threshold value, then the shape entity is added to a list of candidate shape entities that may be assigned to the reference point(s) of the dimension entity, or to the dimension entity itself. If at the end of the matching process only one candidate shape entity is available for this dimension entity reference point(s), or dimension entity, then the single remaining shape entity is associated with the dimension entity reference point(s), or with the dimension entity.

However, if a plurality of shape entities are identified as candidates for association with the dimension entity reference point(s), or with the dimension entity, then the system 10 may be configured to display the candidate shape entities to the user via user interface 17, and to enable the user to select, via the user interface 17, the correct shape entity to associate with the reference point(s) of the dimension entity or with the dimension entity itself.

Optionally, the system 10 may be configured to use any suitable criteria to estimate the appropriate shape entity for a given dimension reference point(s), or dimension entity, e.g. the size or distance of the shape entity from the reference point.

Once the dimension entity is associated with the correct CAD shape entity or entities, this information can be used to find the correct fitted measured shape entity or entities as these are already associated with their matching CAD shape entity, as described above with reference to Figure 6.

In preferred embodiments, the position, or location, and size of each CAD shape entity is compared to the respective associated fitted measured entity to calculate inspection data for each dimension. Any tolerance data associated with the dimension may be used to determine an inspection item status, e.g. pass or fail, or other compliance/non-compliance indication.

For example, the CAD drawing of the object 125 shown in Figure 7 contains a circle 127 which has a diameter of 30mm. The circle 127 represents an aperture in the object 125 which has a nominal diameter of 30mm. The CAD file containing nominal data defining the object 125 includes data defining a circle entity corresponding to circle 127 and a dimension entity corresponding to the diameter of 30mm, the dimension entity including or otherwise being associated with a tolerance of +/- 0.1mm. As a result of the process described above, the diameter dimension entity for the diameter or 30mm is associated with the circle entity for the circle 127. The measurements in the measurement data 18 that are associated with the 30mm diameter CAD circle 127 (via the process described with reference to Figure 6) are used to fit a circle which, in this example, has a size of 30.2mm, i.e. a difference of +0.2mm from the nominal value.

To inspect the measured aperture corresponding to circle 127, the system 10 compares the measured diameter (30.2mm in this example) to the nominal diameter value (30mm in this example) and determines that the difference (+0.2mm in this example) is outside of the tolerance limit (+/-0.1 mm in this example) and so determines that the inspection status of the diameter of aperture 127 is "fail". Accordingly, the aperture 127 in the inspected object 127 has failed this inspection item.

Figure 8 shows a flow chart illustrating the preferred method of assigning dimension data to shape entities and creating inspection items.

At block 801 the system 10, typically the inspection module 16, loads the relevant CAD file 21 (e.g. the CAD file for the CAD drawing shown in Figure 7). The CAD file 21 is therefore provided as an input to the system 10.

At blocks 802 to 807, for each dimension entity the processes of blocks 803 to 807 are performed.

At block 803, the or each reference point for the respective dimension entity is obtained from the CAD file 21 or from the reference data 20, preferably from the reference data produced at block 507 of Figure 5.

In the example of the CAD file for the CAD drawing of Figure 7, the reference points P3, P4 for the horizontal dimension "100.0" are located at the respective centre of the circles 127, 127'. The diameter dimension "D30.0" comprises two reference points corresponding to any two diametrically opposite points, e.g. P1 and P2, along the perimeter of the circle 127, 127' so that the distance between the reference points is the same as the diameter of the circle.

At block 804, the data defining the nominal shape of the object 25, 125 is obtained from the CAD file 21 or from the reference data 20, preferably from the reference data produced at block 507 of Figure 5. The nominal shape data comprises data representing one or more shape entity, typically including one or more reference point for the shape entity, and optionally additional data depending on the entity type. For example, a line entity is associated with a respective reference points corresponding to each end of the line. A circle entity has a reference point corresponding to its centre (e.g. P3 or P4 in Figure 7) and an additional data value defining the radius or diameter of the circle. An arc entity has a reference point corresponding to the centre of the arc and data defining the arc radius, start and end angles.

At block 805 a list of one or more shape entities that are possible matches for the relevant dimension entity is created.

For example, referring to Figure 7, the reference point P4 on the right end of the horizontal dimension "D100.0" matches the reference point of the centre of the circle 127'. The reference point P3 on the left end of the horizontal dimension "D100.0" matches the reference point corresponding to the centre of the circle 127 and also the reference point corresponding to the arc 128. This allows the system 10 to associate the horizontal dimension "D100.0" with both of the circle entities 127, 127', i.e. as the horizontal distance between the circles 127, 127'.

The reference points P1, P2 of the diameter dimension "D30.0" lie on the perimeter of the circle 127. The distance between the reference points P1, P2 will match the diameter of the circle 127 and as this is a diameter dimension, only arc entities and circle entities need be considered when creating the match list for the diameter dimension.

At block 806, the best matches between dimension entities and shape entities is determined. In the example of Figure 7, the reference point P4 at the right end the horizontal dimension "D100.0" has only one match, namely the circle 127', and so it is matched to this circle entity. The reference point P3 at the left end of the horizontal dimension "D100.0" has 2 matches, namely the centre of the circle 127 and the centre of the arc 128. The user may choose which shape entity matches the horizontal dimension. However, the system 10 may configured to make a selection between the relevant shape entities, which in this case may involve selecting the circle entity upon determining that the perimeter of the circle 127 is closer to the reference point P3 than the perimeter of the arc 128 is, i.e. it has a smaller radius. The reference points P1, P2 of the diameter dimension "D30.0" lie only on the perimeter of the circle 127. Furthermore the distance between the reference points P1, P2 matches the diameter of the circle 127 and only circles and arcs can be used as matches for the diameter dimension. Accordingly, the diameter dimension "D30.0" is matched to the circle 127.

At block 807, dimension entity and the associated CAD shape entity or entities are associated are compared with the corresponding fitted measured shape entity or entities derived from the measurement data (e.g. via the process of Figure 6), and an inspection item is created indicating the status (e.g. a pass or fail indication or other compliance/non-compliance indication) for each dimension entity. It is noted that the tasks of block 807 may be performed after the tasks of blocks 802 to 806 have been performed for all dimension entities.

The respective inspection item for some or all of the dimension entities can be collated in the inspection report 22 which can be provided to the user, e.g. via the user interface 17.

In preferred embodiments, the information required by the system 10 to determine the inspection status of an entity is provided by the assignment method of Figure 6 together with the matching method of blocks 802 to 806 of Figure 8. By way of example, for the diameter dimension "D30.0" the following information is obtained, all or part of which may be included in the respective inspection item for the diameter dimension entity:
Nominal Diameter = 30mm
Tolerance = +0.1/-0.1
Measured/Fitted Diameter = 30.06mm
Difference = +0.06mm
Status = PASS

As indicated above, the system 10 is calibrated based on the relative position and/or orientation of the camera 12 and the work surface 24, which are ideally fixed. However, relative movement between the camera 12 and the work surface 24 after calibration is possible, for example as a result of the system 10 being damaged or suffering trauma and/or as a result of settling of the system components and/or due to thermal expansion. Such movement can compromise the system's ability to accurately match the reference data 20 with the measured data 18.

In some embodiments, the system 10 is configured to track the position of the camera 12, or otherwise to track movement of the camera 12, and to make corresponding image adjustments as required. Advantageously, the system 10 is configured to monitor movement of the camera 12 and to compensate for detected movement.

To track movement of the camera 12 relative to the work surface 24, at least one mark 50, but preferably a plurality of spaced-apart marks 50 are provided on the work surface 24 in the field of view of the camera 12. Preferably the marks 50 are located peripherally on the work surface 24, or otherwise at location(s) on the work surface 24 where they are distinct from (i.e. spaced apart from) an object to be inspected when located on the work surface 24. In preferred embodiments, the marks 50 are located at or around the outer perimeter of the work surface 24. In the illustrated embodiment, the marks 50 form a ring around the outer perimeter of the work surface 24 but they may alternatively extend only partly around the perimeter of the work surface 24.

The marks 50 are shaped and dimensioned such that they are detectable in images taken by the camera 12 and such that their location in the plane of the work surface 24 (the X-Z plane in this example) can be determined from images taken by the camera 12. The system 10, optionally the inspection module 16 but alternatively any other convenient part(s) of the computing system 14, may be configured to use any suitable conventional image processing method(s) (for example involving Hough transforms) in order to detect the marks 50 and determine their location. In preferred embodiments, the marks 50 take the form of solid dots or discs (preferably circular but alternatively non-circular), but may alternatively be annular or take any other geometric shape or form that facilitates their detection and location from the image data.

For calibration, the system 10 is configured to determine a reference location of each mark 50 from a reference image taken by the camera 12 (typically in the absence of any object 25 on the work surface). The reference image may for example be taken during set up of the system 10, e.g. before or after the position of the camera 12 relative to the work surface 24 is calibrated.

Subsequently, the system 10 is configured to determine the location of each mark 50 again, preferably on multiple occasions, from one or more image taken by the camera 12. For example, the system 10 may determine the location of each mark 50 from an image taken on any one or more of the following occasions: upon start-up of the system 10 (i.e. when the system 10 is turned on); before, during or after measurement of an object on the work surface 24, a pre-set intervals.

The system 10 is configured to compare the, or each, set of subsequently determined locations of the marks 50 with respective reference locations of the marks 50. Preferably, comparison involves perform an optimization process, or other alignment process, to align the subsequently determined locations with the respective reference locations. Preferably, the optimization/alignment process determines a value for one or more metric, for example translation, rotation and/or scale values, required to align, or substantially align, the subsequently determined locations with the respective reference locations. This may be performed using any conventional mathematical method(s), for example using any conventional minimization method to minimize the difference between the respective location values. The comparison process may be performed using all of or only some of the respective mark locations.

Optionally, if the result of the comparison of the respective mark locations indicates that the relative position of the camera 12 and work surface 24 has changed by more than an acceptable threshold limit (for example if any or all of the relevant metric(s) exceeds a relevant threshold value), the system 10 may issue a warning, e.g. via the user interface 17 or by another audio or visual device, to the user that the system 10 requires recalibration.

Optionally, if the result of the comparison of the respective mark locations indicates that the relative position of the camera 12 and work surface 24 has changed but not by more than the acceptable threshold limit (for example if the or each relevant metric(s) does not exceed the relevant threshold value), the system 10 is configured to adjust the image data, and/or measurement data derived from the image data, to compensate for the detected change in the mark locations. The amount of the adjustment may be determined by the relevant metric value(s), e.g. any one or more of the determined translation, rotation and/or scale values, and may be performed using any conventional mathematical data adjustment method(s). Compensating for the detected change in the mark locations enables the system 10 to perform a more accurate comparison of CAD data and measured data.

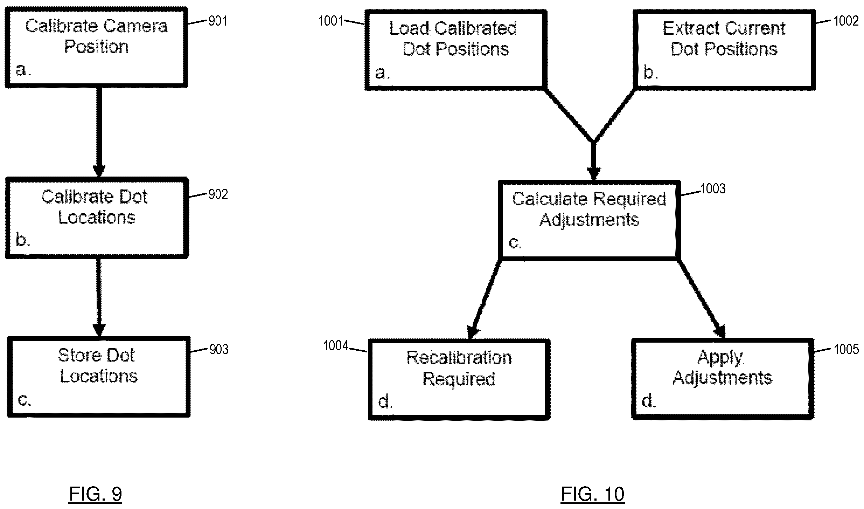

Figure 9 is a flowchart illustrating an exemplary method of tracking movement of the camera 12 in order to compensate for such movement, and in particular illustrates a mark calibration method.

At block 901, the position of the camera 12 relative to the work surface 14 is calibrated using any suitable conventional calibration method.

At block 902, a reference location for each mark is determined from a reference image taken by the camera 12, for example using a Hough transform or other conventional shape detection method.

At block 903, the reference locations are stored for future reference.

Figure 10 is a flowchart illustrating the exemplary method of tracking movement of the camera 12 in order to compensate for such movement, and in particular illustrates a data adjustment method.

At block 1001, the previously stored mark reference locations are obtained.

At block 1002, the mark locations are extracted from an image taken by the camera 12 subsequently to the reference image. The mark locations in step 1402 may be obtained using the same method used to obtain the mark reference locations.

At block 1003, the subsequently determined mark locations are compared with the respective mark reference locations, optionally in order to calculate required adjustment value(s) for the image data and/or measurement data derived from the image data. For example values for rotation, rotation centre, translation and/or scaling metrics, or a subset of these metric, are calculated from the comparison, and are optionally used to adjust the image data and/or measurement data 18. The metric value(s) may be determined by using a conventional minimization technique to minimize the difference, or error, between the subsequently determined mark locations and the mark reference locations.

At block 1004, if the system 10 determines that the error between the subsequently determined mark locations and the mark reference locations are too large to allow the system 10 to perform accurate inspections, and/or that the calculated adjustment value(s) are too large to allow the system 10 to perform accurate inspections, then the system 10 issues a warning to the user that the system 10 requires recalibration.

At block 1005 the required adjustments are applied to the image data and/or to measurement data derived from the image data and/or to any other relevant camera calibration values. For example, to adjust the image data the position, rotation, scale and so on of the input image could be adjusted so that the captured mark locations match the calibrated mark locations. For example, if the input image is shifted by, say, 3 pixels to the left and rotated by, say, 2 degrees about its centre, the marker positions will align well with the calibrated marker positions. The required adjustment may be determined by one or more conventional mathematical technique, for example a least squares or error minimization technique such as Levenberg-Marquardt, or may be directly estimated. Alternatively, the calibrated position and orientation of the camera in 3D may be adjusted so that the measured locations of the marks match well with the measured mark locations. Optionally small adjustments to the internal calibration parameters of the camera such as lens distortion or focal length could also be used. Determination of the required adjustment may be performed using similar error minimization methods as the image based approach or direct estimation.

In preferred embodiments, the system 10 is configured to allow objects that are larger than work surface 24 to be measured, the measurement is advantageously being automated. To this end, the system 10 is configured to measure the object in a plurality of sections. Each section comprises a respective portion of the object such that collectively the sections comprise the whole object, or at least all of the object that it is desired to measure. The respective set of measurements, or measurement data, obtained for each section is transformed into a common co-ordinate system. The respective measurements for each section are then combined to create a single set of measurements, or combined measurement data, for the object.

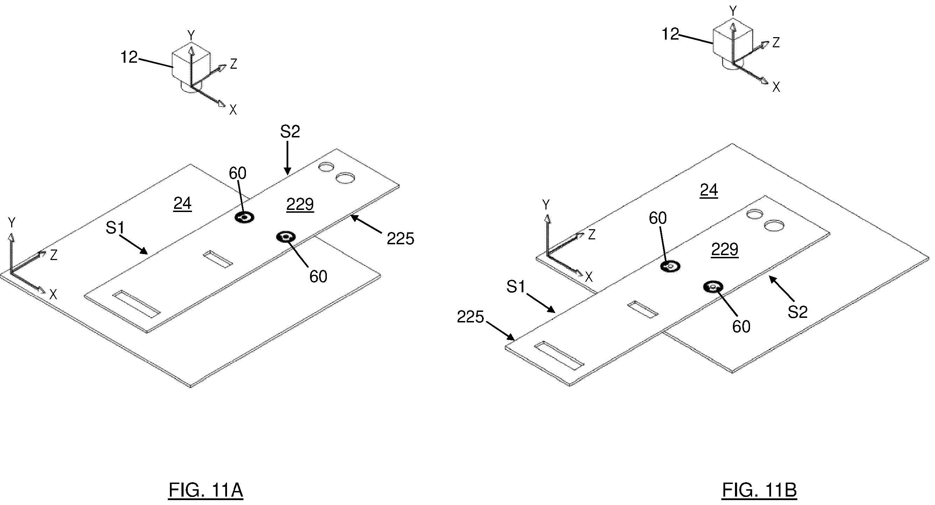

Figures 11A and 11B show an object 225 to be inspected that is larger than the work surface 24. In Figure 11A the object 225 is located on the work surface 24 in a first position in which a first section S1 is in the field of view of the camera 12 and second section S2 is outside of the field of view. In Figure 11B the object is located on the work surface 24 but has been moved (typically manually by the user) into a second position such that section S2 is within the field of view of the camera 12 and at least part of section S1 is outside of the field of view. In this example the whole of the object 225 is comprised of sections S1 and S2 and can be brought into the field of view of the camera 12, one section at a time, by placing it in two different positions. Depending on their size, other objects may need to be moved into more than two different positions (each position bringing a different section into the field of view of the camera 12) in order to bring the whole of the object, or at least all of the sections of the object that are of interest, into the field of view of the camera 12. It is noted that some regions, i.e. parts of sections, or sub-sections, of the object 225 may be in the field of view of the camera 12 in more than one position, as is apparent from the example of Figures 11A and 11B. This can be accounted for by the use of reference markers.

In order to measure the object 225 in sections, two or more reference markers 60 are provided on the upper surface 229 of the object 225. Each reference marker 60 is shaped and dimensioned, at least in the X-Z plane during use, such that it is detectable in image data captured by the camera 12. Each marker 60 is removable from the object 225. The markers 60 may rest on the object 225 but are preferably fixed to the object 225 by a removable fixing, e.g. adhesive or magnet(s). The arrangement is such that the markers 60 remain in a fixed located relative to the object 225 during the multiple section measurement process. The markers 60 are located on the object 225 such that they are within the camera's field of view in each of the different positions described above. Optionally, each marker 60 includes, typically on its upper surface 62, a unique identifier (ID), e.g. a uniquely identifiable symbol or code, that is discernible from the image data captured by the camera 12. Preferably, each marker 60 comprises a planar, or substantially planar, object having a uniform or substantially uniform thickness (i.e. its dimension in the Y direction during use). It is noted that, while in preferred embodiments each marker 60 has a known, non-negligible thickness, in other embodiments the markers may have a negligible thickness (or a thickness that is approximated to zero), e.g. the markers may take the form of flat stickers or the like. Alternatively still, the markers 60 may be provided by existing feature(s) of the object 225, for example each marker 60, or at least one marker 60, may be provided by an aperture that is part of the object 225. In the illustrated embodiment, the markers 60 are circular (in the X-Z plane during use) but may take any other suitable shape.

The position of the camera 12 relative the measuring surface 24 is calibrated in advance of the measurement process. The arrangement is such that the position of the camera 12 and the work surface 24 with respect to a common co-ordinate system (XYZ system) are known by the system 10, in particular the inspection module 16.

The system 10, conveniently the inspection module 16, is configured to take an image, using the camera 12, of the object 225 in each of the different positions. The system 10, conveniently the inspection module 16, is configured to determine the 2D translation and/or rotation (i.e. the translation and/or rotation in the X-Z plane, or more generally a plane perpendicular to the optical axis 13) of the object 225 for each different position from the respective images. In particular the system 10 may be configured to determine the translation and/or rotation of the object 225 between successive different positions from the respective images. The system 10 is configured to identify each marker 60 in each image, and to match or track each marker 60 between images.

In cases in which the markers 60 include a unique ID, the marker matching process is performed using the respective unique ID. In cases in which the markers 60 do not have a unique ID, relative movement of each marker 60 between positions and/or the marker's position relative to one or more feature of the object 225 can be used to uniquely identify each marker 60 in each image.

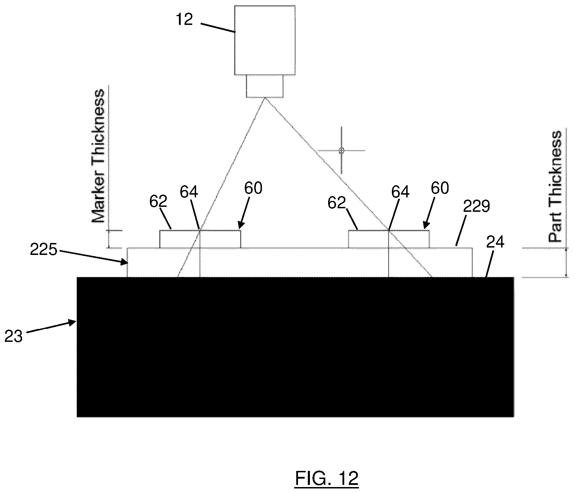

With reference in particular to Figure 12, for each image, the system 10 is configured to use 3D ray tracing to project a reference point 64 on each marker 60 (preferably being a centre point of each marker 60 and/or a point on the upper surface 62 of each marker 62) in the image onto the work surface 24. The projection process is facilitated by the calibration of the camera 12 relative the measuring surface 24 and by the known thicknesses of the markers 60 and the object 225. The true position in 3D (i.e. X, Y and Z dimensions) of the reference point 64 of each marker 60 can be calculated using any suitable geometric method, e.g. involving using similar triangles, to calculate the offset required to move from the projected position of the marker 60 on the work surface 24 to the true position in 3D of the reference point 64. The true 3D position of each marker 60 in each image is used to determine the 2D translation and/or rotation of the object 225 between the different positions. This translation and/or rotation information between the different positions is used to bring the image data and/or measurement data for each position into the common co-ordinate system. Because the data is 2D data a rotation and translation of the measurements is typically performed, for example by translating the measurements so that one of the markers lines up in each measurement set, and then rotating the measurements about that marker so that the other marker also lines up. The translation and/or rotation allows the respective measurements for each section to be combined. Hence, measurement data is obtained for the whole of the object 225, or at least all of the sections of interest, and inspection may be performed as previously described.

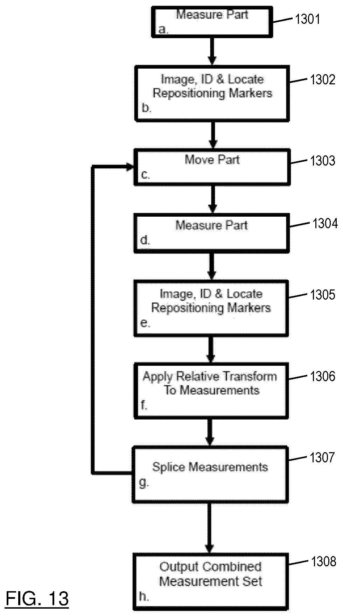

Figure 13 is a flowchart illustrating the preferred method of measuring an object using images taken in multiple different positions.

At 1301, the camera 12 takes an image of the object 225 in a first position in order to measure the object's profile from the image data, e.g. as described above. Assuming that the object 22 is larger than the work surface 24, then the image and the resulting measurements relation to only a section of the object.

At 1302, the reference markers 60 are detected in image data captured by the camera. The relevant image data may be of the image taken at 1301, or from another image of the object 225, as is convenient. For example, it may be advantageous to detect the markers (particularly if the markers are retroflective) from a second image taken when the back light source 30 is switched off and, optionally, the object 225 is illuminated from above by another light source (not illustrated).

For coded markers 60, the respective unique ID is detected. For uncoded markers 60, each marker may be uniquely identified by comparing its location relative to one or more feature of the object 225 and/or the co-ordinate system. The 3D location of each marker's reference point 64 is determined by ray tracing the reference point 64 onto the work surface 24 using the camera's calibrated position and the image of the marker 60. The projected location is then offset using similar triangles and the known thickness of the object 225 and the marker 60.

At 1303, the object 225 is moved to a different position in which a different section of the object (including the reference markers 60) is in the camera's field of view.

At 1304, the camera takes an image of the object 225 in the different position in order to measure a corresponding different section of the object's profile from the image data. As the object 225 is larger than the work surface 24 these measurements will correspond only a respective section of the object 225.

At 1305, the reference markers 60 are detected in image data captured by the camera 12, and their 3D position is determined as per block 1302. As for block 1302, the relevant image data may be of the image taken at 1304, or from another image of the object 225, as is convenient.

At 1306, relative transform(s) are applied to the measurements taken at block 1304 using the reference marker information obtained at block 1305 to cause the measurements to relate to the same common co-ordinate system as the, or each, other set of measurements. The difference between the marker position determined for the previous measurement (which may have been at 1301 or at 1304 in a previous instance of the loop from 1303 to 1307) and the current measurement is used to determine the relative movement of the object 225 between the respective different positions, and a corresponding transform is applied to the current measurement data so that both sets of measurements are in a common co-ordinate system.

At 1307, the respective sets of measurements are spliced together or otherwise combined. Optionally, methods to remove overlapping regions of measurement data can be applied, such as creating a cut / splice line from the marker positions. For example, once each set of measurements is in a common co-ordinate system (e.g. aligned and translated so that the pair of markers in the first image is on top of, or coincident with, the pair of markers in the second image) a notional line may be created between the markers. The notional line may be used to remove excess measurement data from each measurement set. For example, measurements from the image of the right hand side of the object may have all data to the left of the notional line deleted, while measurements from the image of the left hand side of the object may have all data to the right of the notional line deleted. In some situations, for example when the part is very thin and long and the markers cannot be adequately separated, it may be advantageous to create the notional line not from the line connecting the centres of the markers, but perpendicular to this line and thorough its centre point, or similar schema.

Optionally steps 1303 to 1307 are repeated for any other different positions.

At 1308, when the repositioning sequence has completed the combined measurements can be output.

It will be understood that the methods described with references to Figures 5, 6, 8, 9 and 10 may be used independently of each other and are therefore regarded as independent aspects of the invention.

The invention is not limited to the embodiment(s) described herein but can be amended or modified without departing from the scope of the present invention.

## Claims

1. A method of inspecting an object using a digital camera and a computing system, the method comprising:
taking a digital image of the object using the camera, the image comprising digital image data; and
causing the computing system to
derive digital measured data from the digital image data, the measured data representing a measured shape of the object;
obtain digital reference data representing a nominal shape of the object;
compare the measured data and the reference data; and
generate, based on the comparison of the measured data and the reference data, an output indicating one or more instance of compliance or non-compliance of the measured shape of the object to the nominal shape of the object,
wherein obtaining digital reference data involves extracting the reference data from a computer file containing model data defining a model of the object, said computer file preferably being a computer-aided design (CAD) file, and wherein the method typically includes storing the extracted reference data in a reference data file,
and wherein the model data comprises data defining a plurality of entities that define the object, each entity being defined by respective entity data that is associated with at least one characteristic, and wherein extracting the data from the computer file involves filtering the model data based on one or more of said at least one characteristic, and wherein the filtering may involve extracting at least one instance of entity data based on one or more of said at least one characteristic, and/or excluding from extraction at least one instance of entity data based on one or more of said at least one characteristic, and/or excluding at least one instance of entity data that is determined to be not related to the nominal shape of the object.

2. The method of claim 1, wherein said at least one characteristic may comprise any one or more of:
data type; entity type; line type; line thickness; colour and/or layer of the model data with which the entity or data is associated.

3. The method of claim 1 or 2, wherein the filtering involves extracting at least one instance of entity data that is determined to define at least part of the nominal shape of the object and/or a dimension of at least part of the nominal shape of the object and/or a tolerance of a dimension of at least part of the nominal shape, and/or wherein the filtering involves excluding from extraction at least one instance of entity data that is determined not to define at least part of the nominal shape of the object or a dimension of at least part of the nominal shape of the object or a tolerance of a dimension of at least part of the nominal shape.

4. The method of any preceding claim, wherein the filtering involves extracting at least one instance of entity data that is determined to define a line, or a curve or an arc or a circle or an ellipse.

5. The method of any preceding claim, wherein said one or more of said at least one characteristic is selected in response to user input received via a user interface provided by the computing system, and wherein the method optionally further includes causing the computer system to display via a display device at least one image generated from said computer file, the image comprising at least one representation of the object, and to enable user interaction with the displayed at least one image via the user interface, said one or more of said at least one characteristic being selected in response to said user interaction, and wherein said user interaction optionally involves selection by the user of said one or more of said at least one characteristic.

6. The method of claim 5, wherein said user interaction involves selecting one or more part of the at least one representation of the object included in the at least one displayed image, and wherein the method may include causing the computing system to determine said one or more of said at least one characteristic depending on which characteristic(s) are associated with the selected one or more part of the at least one representation of the object included in the at least one displayed image.

7. The method of any preceding claim, wherein determining that at least one instance of entity data is not related to the nominal shape of the object comprises any one or more of: determining that said at least one instance of entity data is not connected to the nominal shape of the object; determining that said at least one instance of entity data does not define an enclosed perimeter; determining that said at least one instance of entity data forms an enclosed perimeter that is not located within an enclosed perimeter associated with the nominal shape of the object.

8. The method of any preceding claim, wherein the model data comprises data defining a plurality of entities that define the object, and wherein the method further includes assigning each measurement contained in said measured data to an entity contained in said model data that defines at least part of the nominal shape of the object, and wherein, optionally, assigning each measurement to an entity involves assigning the measurement to the entity that is determined to be closest to the respective measurement, and wherein, preferably, determining which entity is closest to the measurement involves calculating a distance between each measurement point each entity along a notional line from the measurement that is normal to a profile the entity.

9. The method of claim 8, further including aligning the measured data assigned to a respective entity with the respective entity by rotating and/or translating the measured data to align with the data defining the respective entity, and/or minimizing the distance, or error, between the measured data and the entity data.

10. The method of claims 8 or 9, further including fitting the measured data assigned to a respective entity with an entity type, preferably a shape entity type, associated with the respective entity, and wherein, preferably, comparing the measured data and the reference data involves comparing the fitted measured data of the respective entity with nominal shape data of the respective entity.

11. The method of any preceding claim, wherein the model data comprises data defining at least one shape entity and data defining at least one dimension entity, and wherein each instance of shape entity data comprises a shape entity type, at least one shape entity reference point and optionally a shape entity size, and each instance of dimension entity data comprises a dimension type and at least one reference point, and wherein the method includes associating each instance of dimension entity data with one or more respective instance of shape entity data by comparing the respective dimension entity type with the respective shape entity type and determining that the respective dimension entity type matches the respective shape entity type, and/or by comparing the respective at least one shape entity reference point with the respective at least one dimension entity reference point and determining that the respective at least one shape entity reference point and the respective at least one dimension entity reference point are less than a threshold distance apart, and/or by comparing the respective shape entity size with a distance between at least two dimension entity reference points and determining that the respective shape entity size matches said distance, and wherein, optionally, the method further includes assigning each instance of dimension entity to a respective instance of shape entity if only one instance of shape entity is associated with the respective instance of dimension entity, and/or if there more than one instance of shape entity is associated with a respective instance of dimension entity, causing the computer system to display via a display device a list of said more than one instance of shape entity, and to enable user select one of the instances of shape entity on the displayed list via the user interface, and assigning the respective instance of dimension entity to the instance of shape entity selected by the user.

12. The method of any preceding claim including:
providing said object on a work surface in a field of view of the camera;
providing at least one mark on said work surface in the field of view of the camera, said at least one mark being shaped and dimensioned to be detectable in images taken by said camera;
taking a reference image with said camera and determining a reference location for said at least one mark from said reference image;
taking at least one subsequent image with said camera and determining a respective subsequent location for said at least one mark from each subsequent image;
comparing the respective subsequent location with the respective reference location; and
adjusting the image data and/or the measured data depending on the difference between the respective subsequent location with the respective reference location, and/or generating an output indicating that the difference between the respective subsequent location and the respective reference location is excessive.

13. The method of claim 12, including:
calculating from the respective subsequent location and the respective reference location, an amount by which the relative position of the work surface and the camera has changed, and adjusting the image data and/or the measured data depending on said amount to compensate for the change in the relative position of the work surface and the camera, preferably only if said amount is less than a threshold value; and/or
calculating from the respective subsequent location and the respective reference location, an amount by which the relative position of the work surface and the camera has changed, and generating said output indicating that the difference between the respective subsequent location and the respective reference location is excessive if said amount exceeds a threshold value; and/or
determining a value for at least one metric, for example translation, rotation and/or scale value(s), required to align, or substantially align, the respective subsequent location with the respective reference location, and using the value of said at least one metric to perform any one or more of the following tasks: adjust the image data and/or the measured data: determine an amount by which the relative position of the work surface and the camera has changed; and/or determine whether or not to generate said output indicating that the difference between the respective subsequent location and the respective reference location is excessive.

14. The method of any preceding claim including:
providing at least two reference markers on the object;
locating the object in a first position on a work surface and taking a first image of a first section of said object, said image including said at least two markers;
moving the object to a second position on the work surface and taking a second image of a second section of said object, said image including said at least two markers;
determining from the image data of said first and second images a translation and/or a rotation of said at least two markers between said first and second positions, said translation and/or rotation preferably being determined with respect to a plane that is perpendicular to a line of sight of the camera; and
transforming the respective image data and/or measured data of at least one of said first and
second images to a common co-ordinate system using the determined translation and/or
rotation,
the method optionally including determining a respective 3-dimensional location of said at least two makers from each image, and determining said translation and/or rotation from the respective 3-dimensional locations, wherein the method preferably includes projecting, preferably using 3D ray tracing, a respective reference point on said at least two markers to the work surface to determine a respective projected reference point on the work surface, and to determine the respective 3-dimensional location from the respective projected reference point, preferably by using one or more geometric method, for example using similar triangles, to calculate an offset between the respective 3-dimensional location and the respective projected reference point.

15. A system for inspecting an object, the system comprising:
a digital camera for taking a digital images of the object, each image comprising digital image data; and
a computing system comprising:
means for deriving digital measured data from the digital image data, the measured data representing a measured shape of the object;
means for obtaining digital reference data representing a nominal shape of the object;
means for comparing the measured data and the reference data; and
means for generating, based on the comparison of the measured data and the reference data, an output indicating one or more instance of compliance or non-compliance of the measured shape of the object to the nominal shape of the object.
